# EUROPÄISCHE PATENTSCHRIFT

(11) **EP 0 819 209 B1**
(45) Veröffentlichungstag und Bekanntmachung des Hinweises auf die Patenterteilung: **09.06.1999**
(21) Anmeldenummer: 96906695.0
(22) Anmeldetag: 21.03.1996
(51) Int. Cl.: F01K 23/10

(54) **VERFAHREN ZUM BETREIBEN EINES ABHITZEDAMPFERZEUGERS SOWIE DANACH ARBEITENDER ABHITZEDAMPFERZEUGER**
METHOD OF OPERATING A WASTE-HEAT STEAM GENERATOR, AND A WASTE-HEAT STEAM GENERATOR OPERATED BY THIS METHOD
PROCEDE DE FONCTIONNEMENT D'UN GENERATEUR DE VAPEUR A RECUPERATION DE CHALEUR, ET GENERATEUR DE VAPEUR A RECUPERATION DE CHALEUR FONCTIONNANT SELON CE PROCEDE

(30) Priorität: 03.04.1995 DE 19512466
(43) Veröffentlichungstag der Anmeldung: 21.01.1998
(73) Patentinhaber: SIEMENS AKTIENGESELLSCHAFT, 80333 München (DE)
(72) Erfinder: BRÜCKNER, Hermann, D-91080 Uttenreuth (DE); SCHMID, Erich, D-91080 Marloffstein (DE); ERNSTBERGER, Wilhelm, D-91090 Effeltrich (DE)
(86) Internationale Anmeldenummer: DE9600491
(87) Internationale Veröffentlichungsnummer: WO9631685

(56) Entgegenhaltungen:
- EP-A- 0 400 370
- EP-A- 0 588 392
- FR-A- 2 551 181

## Beschreibung

Die Erfindung betrifft ein Verfahren zum Betreiben einer Gas- und Dampfturbinenanlage, bei dem eine zugehörige, sowohl mit Gas als auch mit Öl als Brennstoff betreibbare Gasturbine mit Öl als Brennstoff betrieben wird, wobei die im entspannten Arbeitsmittel der Gasturbine enthaltene Wärme zur Erzeugung von Dampf für eine zugehörige in einen Wasser-Dampf-Kreislauf geschaltete Dampfturbine genutzt wird, und bei dem kondensierter Dampf aus der Dampfturbine dem Wasser-Dampf-Kreislauf als Kondensat zugeführt wird. Sie richtet sich weiter auf eine nach diesem Verfahren arbeitende Gas- und Dampfturbinenanlage.

Eine Gas- und Dampfturbinenanlage, bei der die im entspannten Arbeitsmittel aus der Gasturbine enthaltene Wärme zur Erzeugung von Dampf für die Dampfturbine genutzt wird, umfaßt üblicherweise einen Abhitzedampferzeuger. Die Wärmeübertragung erfolgt mittels einer Anzahl von Heizflächen, die in Form von Rohren oder Rohrbündeln in Abhitzedampferzeugern angeordnet sind. Diese wiederum sind in den Wasser-Dampf-Kreislauf der Dampfturbine geschaltet. Der Wasser-Dampf-Kreislauf umfaßt mehrere, z.B. zwei oder drei, Druckstufen, wobei jede Druckstufe eine Vorwärm-Heizfläche (Economizer), eine Verdampfer-Heizfläche und eine Überhitzer-Heizfläche aufweist. Mit einer derartigen, z.B. aus der EP 0 148 973 B1 bekannten, Gas- und Dampfturbinenanlage wird je nach den im Wasser-Dampf-Kreislauf der Dampfturbine herrschenden Druckverhältnissen ein thermodynamischer Wirkungsgrad von etwa 50 bis 55% erreicht.

Aus der FR-A-2 551 181 ist eine Gas- und Dampfturbinenanlage bekannt, deren Gasturbine sowohl mit Gas als auch mit Öl betreibbar ist. Aus dem Wasser-Dampf-Kreislauf dieser Gas- und Dampfturbinenanlage wird ein Teilstrom zu Vorwärmzwecken abgezweigt.

Eine Gas- und Dampfturbinenanlage, bei der als Brennstoff für die Gasturbine Heizöl nur für eine kurze Betriebsdauer, z.B. für 100 bis 500 h/a als "Back-up" zu Erdgas, vorgesehen ist, wird die Anlage vordringlich für Erdgasbetrieb der Gasturbine ausgelegt und optimiert. Um bei Heizbetrieb die Speisewasser temperatur bei Eintritt in den Abhitzedampferzeuger ohne eine aufwendige Turbinenanzapfung zu erhöhen, kann die notwendige Wärme auf verschiedene Weise aus dem Abhitzedampferzeuger selbst entnommen werden. Eine Möglichkeit besteht darin, einen üblicherweise vorgesehenen Kondensatvorwarmer ganz oder teilweise zu umführen und das Kondensat in einem in den Wasser-Dampf-Kreislauf geschalteten Speisewasserbehälter durch Zuführung von Niederdruck-Dampf aufzuheizen. Eine solche Methode erfordert allerdings bei geringen Dampfdrücken ein großvolumiges und unter Umständen mehrstufiges Heißdampfsystem im Speisewasserbehälter, was bei großen Aufheizspannen eine üblicherweise im Speisewasserbehälter stattfindende Entgasungsfunktion gefährden kann.

Um eine wirkungsvolle Entgasung des Kondensats sicherzustellen, ist die Kondensattemperatur im Speisewasserbehälter möglichst in einem Temperaturbereich zwischen 130 und 160° C zu halten, wobei die Aufheizspanne des Kondensats im Speisewassserbehälter klein gehalten werden soll. Dies kann beispielsweise durch eine Vorwärmung des Kondensats über einen mittels Dampf beheizten zusätzlichen Vorwärmer erfolgen. Um dazu genügend Wärme zur Verfügung zu stellen, ist bei Zwei- oder Drei-Druck-Anlagen häufig die Entnahme von Heißwasser aus einem Hochdruck-Economizer des Abhitzedampferzeugers notwendig. Dies hat allerdings, insbesondere bei Drei-Druck-Anlagen, den Nachteil, daß eine üblicherweise vorgesehene Hochdruck-Speisepumpe in ihrer Fördermenge beeinflußt werden kann, und daß der zusätzliche Kondensatvorwarmer in besonders unwirtschaftlicher Weise für den hohen Druck sowie große Temperaturdifferenzen ausgelegt werden muß. Weiter entstehen in nachteiliger Weise bei Heizölbetrieb Drosselverluste der oder jeder Speisepumpe. Ferner führt die Entnahme von Heißwasser aus dem Hochdruck-Economizer zu einer Verminderung der Hochdruck-Dampfmenge durch eine Absenkung der sogenannten Hochdruck-Approach-Temperatur, was wiederum zu einer Reduzierung des Anlagenwirkungsgrades führt.

Der Erfindung liegt daher die Aufgabe zugrunde, ein Verfahren zum Betreiben einer Gas- und Dampfturbinenanlage der obengenannten Art anzugeben, mit dem unabhängig vom eingesetzten Brennstoff für die Gasturbine ein besonders hoher Anlagenwirkungsgrad erreicht wird. Dies soll bei einer zur Durchführung des Verfahrens geeigneten Gas- und Dampfturbinenanlage mit geringem technischen Aufwand erreicht werden.

Bezüglich des Verfahrens wird diese Aufgabe erfindungsgemäß dadurch gelöst, daß ein solcher Teilstrom aus dem Wasser-Dampf-Kreislauf zur Kondensatvorwärmung herangezogen wird, der bei Verwendung von Gas als Brennstoff für die Gasturbine zur Brennstoffvorwärmung verwendet wird.

Die Erfindung geht dabei von der Überlegung aus, daß bei einer Gas- und Dampfturbinenanlage mit hoher Wirkungsgradforderung bei Erdgasbetrieb üblicherweise eine Brennstoffvorwärmung vorgesehen ist, wie sie prinzipiell aus der WO 95/00747 bekannt ist. Danach wird zur Brennstoffvorwärmung ein Teilstrom aufgeheizten Wassers aus dem Wasser-Dampf-Kreislauf der Dampfturbine entnommen und nach indirektem Wärmetausch mit dem Brennstoff dem Wasser-Dampf-Kreislauf wieder zugeführt.

In vorteilhafter Weiterbildung wird bei Verwendung von Gas als Brennstoff dieser jedoch nicht direkt aufgeheizt. Vielmehr wird die Wärme an einen Zwischenkreislauf, z.B. über einen Wasser/Wasser-Wärmetauscher, abgegeben, so daß erst das im Zwischenkreislauf strömende Medium zur Aufwärmung des Brennstoffs dient. Da bei Verwendung von Öl als Brennstoff dieses Vorwärmsystem nicht benötigt wird, wird es zweckmäßigerweise im Ölbetrieb zur Kondensatvorwärmung eingesetzt, wobei dann der Zwischenkreislauf abgeschaltet werden kann. Der bei der Kondensatvorwärmung abgekühlte Teilstrom wird vorteilhafterweise dem Kondensat wieder zugemischt.

Die im Abgas aus der Gasturbine enthaltene fühlbare Wärme nimmt bei einem aus drei Druckstufen, nämlich einer Niederdruckstufe, einer Mitteldruckstufe und einer Hochdruckstufe, aufgebauten Wasser-Dampf-Kreislauf im Abhitzedampferzeuger in Strömungsrichtung des Abgases vom Hochdrucksystem über das Mitteldrucksystem zum Niederdrucksystem hin ab. Um für die Kondensatvorwärmung die erforderliche Wärme bereitzustellen, erfolgt zweckmäßigerweise sowohl die Teilstromentnahme als auch die Teilstromrückführung aus der bzw. in die Mitteldruckstufe. Dabei wird der Teilstrom der Mitteldruckstufe zweckmäßigerweise dann wieder zugeführt, wenn betriebsbedingt die Niederdruck-Dampfproduktion einen vorgegebenen Wert unterschreitet. Dies geschieht zweckmäßigerweise dadurch, daß vorzugsweise von einem Mitteldruck-Economizer entnommenes und bei der Kondensatvorwärmung abgekühltes Wasser nicht zum Kondensatsystem, sondern zu einer Mitteldruck-Dampftrommel geleitet und dort wieder aufgewärmt wird. Dadurch steht die für eine Speisewasservorwärmung eingesparte Wärme der Kondensataufwärmung zur Verfügung. Außerdem nimmt die Dampfproduktion der Mitteldruckstufe entsprechend ab, so daß auch die Kondensatmenge für die Mitteldruckstufe reduziert wird.

Da mit diesem Verfahren Eintrittstemperaturen des Abhitzedampferzeuger bis z.B. 135° C beherrscht werden können, kann praktisch das gesamte Heizölspektrum für diesen Zweck (Back Up Fuel) abgedeckt werden, so daß eine Standardisierung möglich ist.

Bezüglich der Gas- und Dampfturbinenanlage mit einem der Dampfturbine in einem Wasser-Dampf-Kreislauf nachgeschalteten Kondensator, wird die genannte Aufgabe erfindungsgemäß durch die Merkmale des Anspruchs 7 gelöst.

In vorteilhafter Ausgestaltung ist der Wärmetauscher primärseitig einer im Abhitzedampferzeuger angeordneten Vorwärm-Heizfläche, vorzugsweise einem Mitteldruck-Economizer, nachgeschaltet.

Um aus Sicherheitsgründen im Fall einer Leckage bei einem indirekten Wärmetausch einen Kontakt zwischen dem Brennstoff und dem Teilstrom zu vermeiden, ist der Wärmetauscher zur Brennstoffvorwärmung vorteilhafterweise sekundärseitig in einen Zwischenkreis geschaltet. Zur Kondensatvorwärmung erfolgt dann eine Umschaltung mit einer Abschaltung des Zwischenkreises, wobei dann der Wärmetauscher sekundärseitig an die Kondensatleitung angeschlossen ist. Zur Wahl der Vorwärmung entweder des Gasturbinenbrennstoffs oder des Kondensats ist zweckmäßigerweise mindestens ein Ventil, z.B. im Zwischenkreis und/oder in der Verbindung vom Wärmeaustauscher zur Kondensatleitung, vorgesehen.

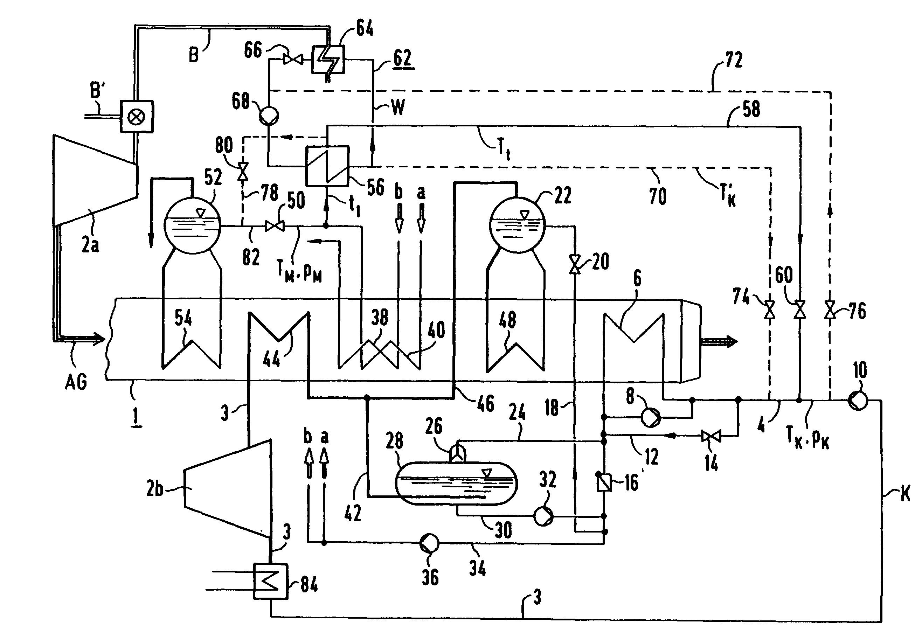

Ausführungsbeispiele der Erfindung werden anhand einer Zeichnung näher erläutert. Darin zeigt die Figur im Ausschnitt einen Abhitzedampferzeuger, dessen Heizflächen in einen Wasser-Dampf-Kreislauf einer Gas- und Dampfturbinenanlage geschaltet sind.

Der in der Figur im Ausschnitt dargestellte Abhitzedampferzeuger 1 ist Teil einer Gas- und Dampfturbinenanlage zur Erzeugung elektrischer Energie. Er wird vom heißen Abgas AG aus der Gasturbine 2a durchströmt und dient zur Dampferzeugung, wobei dessen Heizflächen in einen Wasser-Dampf-Kreislauf 3 einer Dampfturbine 2b geschaltet sind.

Dazu weist der Abhitzedampferzeuger 1 einen an eine Kondensatleitung 4 angeschlossenen Kondensatvorwarmer 6 auf, der ausgangsseitig über eine Umwälzpumpe 8 mit seinem Eingang verbunden ist. Zur bedarfsweisen Umführung des Kondensatvorwärmers 6 ist auf der Druckseite einer Kondensatpumpe 10 an die Kondensatleitung 4 eine Bypassleitung 12 mit einem Ventil 14 angeschlossen, die mit dem Ausgang des Kondensatvorwärmers 6 verbunden ist. Der Kondensatvorwarmer 6 ist ausgangsseitig über eine Rückschlagklappe 16 und eine Leitung 18 mit einem Ventil 20 mit einer Niederdruck-Trommel 22 verbunden. Der Kondensatvorwarmer 6 ist außerdem ausgangsseitig über eine Leitung 24 mit einem einen Entgaser 26 aufweisenden Entgasertank oder Speisewasserbehälter 28 verbunden. Der Speisewasserbehälter 28 ist ausgangsseitig über eine Leitung 30 mit einer Umwälzpumpe 32 sowohl über die Rückschlagklappe 16 und die Leitung 24 mit seinem Eingang als auch mit der Leitung 18 verbunden. Der Speisewasserbehälter 28 ist ausgangsseitig außerdem über eine Leitung 34 mit einer Speisewasserpumpe 36 - wie durch die Pfeile a und b dargestellt - mit einem Hochdruck-Economizer 38 und mit einem Mitteldruck-Economizer 40 verbunden.

Zur Speisewasservorwärmung mündet in den Speisewasserbehälter 28 eine Dampfleitung 42, die an eine von der Niederdruck-Trommel 22 zu einer Niederdruck-Überhitzer-Heizfläche 44 führenden Dampfleitung 46 angeschlossen ist. Die Niederdruck-Überhitzer-Heizfläche 44 bildet zusammen mit der Niederdruck-Trommel 22 und einer an die Niederdruck-Trommel 22 angeschlossenen Niederdruck-Verdampfer-Heizfläche 48 sowie mit einem Niederdruckteil der Dampfturbine 2b die Niederdruckstufe des Wasser-Dampf-Kreislaufs 3.

Der Mitteldruck-Economizer 40 ist ausgangsseitig über ein Ventil 50 mit einer Mitteldruck-Trommel 52 verbunden, an die eine Mitteldruck-Verdampfer-Heizfläche 54 angeschlossen ist. Der Mitteldruck-Economizer 40 bildet zusammen mit der Mitteldruck-Trommel 52 und der Mitteldruck-Verdampfer-Heizfläche 54 sowie einer nicht dargestellten Mitteldruck-Überhitzer-Heizfläche und einem Mitteldruckteil der Dampfturbine 2b die Mitteldruckstufe des Wasser-Dampf-Kreislaufs 3.

Entsprechend ist der Hochdruck-Economizer 38 Teil einer nicht näher dargestellten Hochdruckstufe des Wasser-Dampf-Kreislaufs 3.

Der Mitteldruck-Economizer 40 ist ausgangsseitig außerdem mit einem Wärmetauscher 56 verbunden, der primärseitig in eine mit der Kondensatleitung 4 verbundene Primärleitung 58 geschaltet ist, in der ein Reduzierventil 60 liegt. Der Wärmetauscher 56 ist sekundärseitig in einen Zwischenkreis 62 mit einem weiteren Wärmetauscher 64 zur Brennstoffvorwärmung geschaltet. In den das Brennstoffvorwärmsystem bildenden Zwischenkreis 62 sind außerdem in Strömungsrichtung hinter dem zweiten Wärmetauscher 64 ein Ventil 66 und eine Pumpe 68 geschaltet. An den Zwischenkreis 62, d.h. an die Sekundärseite des Wärmetauscher 56, sind außerdem eine gestrichelt dargestellte erste Leitung 70 und eine ebenfalls gestrichelt dargestellte zweite Leitung 72 angeschlossen. Die erste Leitung 70 mündet über ein Ventil 74 in die Kondensatleitung 4. Die zweite Leitung 72, in die ein Ventil 76 geschaltet ist, verbindet die Kondensatleitung 4 mit der Saugseite der in den Zwischenkreis 62 geschalteten Pumpe 68. An die Primärleitung 58 des Wärmetauschers 56 ist eine ebenfalls gestrichelt dargestellte Leitung 78 mit einem Ventil 80 angeschlossen, die in eine den Mitteldruck-Economizer 40 mit der Mitteldruck-Trommel 52 verbindende Leitung 82 mündet.

Beim Betrieb des Abhitzedampferzeugers 1 wird dem Kondensatvorwarmer 6 über die Pumpe 10 und die Kondensatleitung 4 Kondensat K aus einem der Dampfturbine nachgeschalteten Kondensator 84 zugeführt. Dabei kann der Kondensatvorwarmer 6 über die Leitung 12 ganz oder teilweise umführt werden. Die Temperatur T_{K} beträgt etwa 25 bis 40° C. Der Kondensatdruck p_{K} beträgt etwa 10 bis 20 bar. Das Kondensat K wird in dem Kondensatvorwarmer 6 aufgewärmt und dazu mindestens teilweise über die Umwälzpumpe 8 umgewälzt. Das aufgewärmte Kondensat K wird über die Leitung 24 teilweise oder vollständig in den Speisewasserbehälter 28 oder in den Entgaser 26 geführt, wobei dort eine Aufwärmung des Speisewassers mittels über die Leitung 42 geführtem Dampf und eine Entgasung des Kondensats K erfolgt. Das aufgewärmte Speisewasser wird einerseits der Niederdruck-Trommel 22 und andererseits über die Speisewasserpumpe 36 dem Mitteldruck-Economizer 40 sowie mit erhöhtem Druck dem Hochdruck-Economizer 38 zugeführt. Das der Niederdruckstufe zugeführte Speisewasser wird in der Niederdruck-Verdampfer-Heizfläche 48 bei niedrigem Druck verdampft, wobei der in der Niederdruck-Trommel 22 abgetrennte, unter niedrigem Druck stehende Dampf zum Teil dem Speisewasserbehälter 28 und zum Teil der Niederdruck-Überhitzer-Heizfläche 44 zugeführt wird. Der dort überhitzte Dampf wird dem Niederdruckteil der Dampfturbine 2b zugeführt.

Ebenso wird das unter einem mittleren Druck p_{M} von etwa 40 bis 50 bar stehende Speisewasser mit einer Temperatur T_{M} von etwa 220 bis 240° C der Mitteldruck-Trommel 52 zugeführt und in der Mitteldruck-Verdampfer-Heizfläche 54 verdampft. Der in der Mitteldruck-Trommel 52 abgetrennte, unter mittlerem Druck stehende Dampf wird dem Mitteldruckteil der Dampfturbine 2b zugeführt. Analog wird das unter hohem Druck stehende und im Hochdruck-Economizer 38 aufgeheizte Speisewasser verdampft und in überhitztem Zustand dem Hochdruckteil der Dampfturbine 2b zugeführt.

Ein aus dem Wasser-Dampf-Kreislauf 3 entnommener Teilstrom t₁ wird über den Wärmetauscher 56 geführt und dort abgekühlt. Der abgekühlte Teilstrom t₁ wird dem Wasser-Dampf-Kreislauf 3 wieder zugeführt. Dabei kann die Rückführung des abgekühlten Teilstroms t₁ entweder über die Leitung 58 durch Zumischung zu dem Kondensat K oder über die Leitung 78 durch Einspeisung in die Mitteldruck-Trommel 52 erfolgen. Zur Umschaltung sind die Ventile 60 und 80 vorgesehen. Die Abkühlung des Teilstroms t₁ erfolgt durch indirekten Wärmetausch im Wärmetauscher 56.

Bei Verwendung von Gas als Gasturbinenbrennstoff B erfolgt der Wärmetausch des Teilstroms t₁ im Wärmetauscher 56 mit einem in dem Zwischenkreis 62 im Umlauf geführten Medium W, vorzugsweise Wasser, das diese Wärme wiederum über den zweiten Wärmetauscher 64 an den Gasturbinenbrennstoff B abgibt.

Bei Verwendung von Öl als Gasturbinenbrennstoff B' wird der Zwischenkreis 62 über das Ventil 66 abgeschaltet, und der Wärmetausch des Teilstroms t₁ im Wärmetauscher 56 erfolgt mit über die Leitung 72 dem Wärmetauscher 56 zugeführtem Kondensat K, das nach Abkühlung im Wärmetauscher 56 dem über die Kondensatleitung 4 strömenden Kondensat K über die Leitung 70 wieder zugemischt wird. Dabei wird der Teilstrom t₁ auf eine Temperatur Tₜ von etwa 50° C abgekühlt, wobei das dem Wärmetauscher 56 sekundärseitig über die Leitung 70 entströmende Kondensat K auf eine Temperatur T_{K'} von etwa 100 bis 180° C aufgewärmt wird. Somit wird der bei Einsatz von Gas als Brennstoff B für die Gasturbine 2a zur Brennstoffvorwärmung verwendete Teilstrom t₁ bei Einsatz von Öl als Brennstoff B' für die Gasturbine 2a zur Kondensatvorwärmung herangezogen.

Durch Einsatz des bei Ölbetrieb nicht benötigten, im wesentlichen den Wärmetauscher 56 umfassenden Brennstoffvorwärmsystems 62, 68 zur Kondensatvorwärmung werden dazu bisher vorgenommene Entnahmen aus dem Wasser-Dampf-Kreislauf 3, insbesondere aus dem Hochdruck-Economizer 38, eingespart. Außerdem entfällt eine externe Kondensatvorwärmung inklusive dafür erforderlicher Rohrleitungen und Armaturen sowie einer entsprechenden Regelung. Somit ist sowohl bei Gasbetrieb als auch bei Ölbetrieb ein besonders hoher Anlagenwirkungsgrad erreicht. Dabei ist eine Umschaltung von der Brennstoffvorwärmung auf die Kondensatvorwärmung in einfacher Weise möglich.

## Patentansprüche

1. Verfahren zum Betreiben einer Gas- und Dampfturbinenanlage (2), bei dem eine zugehörige, sowohl mit Gas als auch mit Öl als Brennstoff (B,B') betreibbare Gasturbine (2a) mit Öl als Brennstoff betrieben wird, wobei die im entspannten Arbeitsmittel (AG) der Gasturbine (2a) enthaltene Wärme zur Erzeugung von Dampf für eine zugehörige in einen Wasser-Dampf-Kreislauf (3) geschaltete Dampfturbine (2b) genutzt wird, und bei dem kondensierter Dampf aus der Dampfturbine (2b) dem Wasser-Dampf-Kreislauf (3) als Kondensat (K) zugeführt wird,
**dadurch gekennzeichnet**, daß ein solcher Teilstrom (t₁) aus dem Wasser-Dampf-Kreislauf (3) zur Kondensatvorwärmung herangezogen wird, der bei Verwendung von Gas als Brennstoff für die Gasturbine (2a) zur Brennstoffvorwärmung verwendet wird.

2. Verfahren nach Anspruch 1,
**dadurch gekennzeichnet**, daß zur Brennstoffvorwärmung ein indirekter Wärmetausch über einen Zwischenkreis (62) erfolgt.

3. Verfahren nach Anspruch 2,
**dadurch gekennzeichnet**, daß zur Kondensatvorwärmung der Zwischenkreis (62) abgeschaltet wird.

4. Verfahren nach einem der Anspruch 1 bis 3,
**dadurch gekennzeichnet**, daß der bei der Kondensatvorwärmung abgekühlte Teilstrom (t₁) dem Kondensat (K) zugemischt wird.

5. Verfahren nach einem der Ansprüche 1 bis 4, wobei der Wasser-Dampf-Kreislauf (3) aus drei Druckstufen aufgebaut ist,
**dadurch gekennzeichnet**, daß der Teilstrom (t₁) der Mitteldruckstufe (40, 52, 54) des Wasser-Dampf-Kreislaufes (3) entnommen wird.

6. Verfahren nach Anspruch 5,
**dadurch gekennzeichnet**, daß der bei der Kondensatvorwärmung abgekühlte Teilstrom (t₁) der Mitteldruckstufe (40, 52, 54) des Wasser-Dampf-Kreislaufes (3) wieder zugeführt wird.

7. Gas- und Dampfturbinenanlage (2) mit einer Gasturbine (2a), deren Brennkammer über eine erste Brennstoffleitung Gas und über eine zweite Brennstoffleitung Öl als Brennstoff (B, B') zuführbar ist, und mit einer in einen Wasser-Dampf-Kreislauf (3) geschalteten Kondensatleitung (4),
**gekennzeichnet durch** einen primärseitig mit einem Teilstrom (t₁) aus dem Wasser-Dampf-Kreislauf (3) beaufschlagbaren Wärmetauscher (56), der sekundärseitig derart mit der ersten Brennstoffleitung und mit der Kondensatleitung (4) verbunden ist, daß der Teilstrom (t1) zur wahlweisen Vorwärmung des Gasturbinenbrennstoffs (B) oder des Kondensats (K) nutzbar ist.

8. Gas- und Dampfturbinenanlage (2) nach Anspruch 7,
**dadurch gekennzeichnet**, daß der Wärmetauscher (56) primärseitig einer Vorwärmer-Heizfläche (40) nachgeschaltet ist.

9. Gas- und Dampfturbinenanlage (2) nach Anspruch 7 oder 8,
**dadurch gekennzeichnet**, daß der Wärmetauscher (56) zur Vorwärmung des Gasturbinenbrennstoffs (B) sekundärseitig in einen Zwischenkreis (62) geschaltet ist.

10. Gas- und Dampfturbinenanlage (2) nach einem der Ansprüche 7 bis 9,
**dadurch gekennzeichnet**, daß zur Wahl der Vorwärmung entweder des Gasturbinenbrennstoffs (B) oder des Kondensats (K) mindestens ein Ventil (66, 74, 76) vorgesehen ist.

## Claims

1. Method for operating a gas-turbine and steam-turbine station (2), in which method an associated gas turbine (2a), which can be operated both with gas and with oil as fuel (B,B'), is operated with oil as the fuel, the steam-generating heat contained in the expanded working medium (AG) of the gas turbine (2a) being used for an associated steam turbine (2b) connected into a water/steam circuit (3), and in which method condensed steam from the steam turbine (2b) is supplied as condensate (K) to the water/steam circuit (3), characterized in that that part stream (t₁) from the water/steam circuit (3) is used for condensate preheating which, when gas is used as a fuel for the gas turbine (2a), is used for fuel preheating.

2. Method according to Claim 1, characterized in that, for fuel preheating, an indirect heat exchange via an intermediate circuit (62) takes place.

3. Method according to Claim 2, characterized in that, for condensate preheating, the intermediate circuit (62) is cut off.

4. Method according to one of Claims 1 to 3, characterized in that the part stream (t₁) cooled during condensate preheating is admixed with the condensate (K).

5. Method according to one of Claims 1 to 4, the water/steam circuit (3) being composed of three pressure stages, characterized in that the part stream (t₁) is extracted from the medium-pressure stage (40, 52, 54) of the water/steam circuit (3).

6. Method according to Claim 5, characterized in that the part stream (t₁) cooled during condensate preheating is supplied again to the medium-pressure stage (40, 52, 54) of the water/steam circuit (3).

7. Gas-turbine and steam-turbine station (2) having a gas turbine (2a) whose combustion chamber can be supplied with gas as fuel (B,B') via a first fuel conduit and with oil as fuel (B,B') via a second fuel conduit, and having a condensate conduit (4) connected into a water/steam circuit, characterized by a heat exchanger (56) which can be subjected on the primary side to a part stream (t₁) from the water/steam circuit (3) and which is connected on the secondary side to the first fuel conduit and to the condensate conduit (4) in such a way that the part stream (t₁) can be used for optional preheating of the gas turbine fuel (B) or of the condensate (K).

8. Gas-turbine and steam-turbine station (2) according to Claim 7, characterized in that the heat exchanger (56) is located, on the primary side, downstream of a preheating heating surface (40).

9. Gas-turbine and steam-turbine station (2) according to Claim 7 or 8, characterized in that, for preheating the gas-turbine fuel (B), the heat exchanger (56) is connected on the secondary side into an intermediate circuit (62).

10. Gas-turbine and steam-turbine station (2) according to one of Claims 7 to 9, characterized in that at least one valve (66, 74, 76) is provided for selecting the preheating either of the gas-turbine fuel (B) or of the condensate (K).

## Revendications

1. Procédé pour faire fonctionner une installation (2) de turbines à gaz et à vapeur, suivant lequel une turbine (2a) à gaz associée, pouvant fonctionner tant avec du gaz que du mazout comme combustible (B, B'), est exploitée avec du mazout comme combustible, la chaleur contenue dans le fluide (AG) de travail détendu de la turbine (2a) à gaz étant utilisée pour produire de la vapeur pour une turbine (2b) à vapeur associée, montée dans un circuit (3) d'eau et de vapeur, et suivant lequel de la vapeur condensée provenant de la turbine (2b) à vapeur est apportée comme condensat (K) au circuit (3) d'eau et de vapeur,
**caractérisé** en ce qu'on soutire, du circuit (3) d'eau et de vapeur pour le préchauffage du condensat, un flux (t₁) partiel qui est utilisé pour le préchauffage du combustible lorsqu'on utilise du gaz comme combustible pour la turbine (2a) à gaz.

2. Procédé suivant la revendication 1, **caractérisé** en ce que, pour le préchauffage du combustible, un échange indirect de chaleur s'effectue au moyen d'un circuit (62) intermédiaire.

3. Procédé suivant la revendication 2, **caractérisé** en ce que le circuit (62) intermédiaire est désaccouplé pour le préchauffage du condensat.

4. Procédé suivant l'une des revendications 1 à 3, **caractérisé** en ce que le flux (t₁) partiel refroidi lors du préchauffage du condensat est mélangé au condensat (K).

5. Procédé suivant l'une des revendications 1 à 4, le circuit (3) d'eau et de vapeur étant constitué de trois étages de pression, **caractérisé** en ce qu'on soutire du circuit (3) d'eau et de vapeur le flux (t₁) partiel de l'étage (40, 52, 54) à moyenne pression.

6. Procédé suivant la revendication 5, **caractérisé** en ce que le flux (t₁) partiel refroidi lors du préchauffage du condensat est rapporté à l'étage (40, 52, 54) à moyenne pression du circuit (3) d'eau et de vapeur.

7. Installation (2) de turbines à gaz et à vapeur, comprenant une turbine (2a) à gaz pouvant recevoir, comme combustible (B, B'), du gaz par l'intermédiaire d'une première conduite de combustible et du mazout par l'intermédiaire d'une deuxième conduite de combustible, et comprenant une conduite (4) de condensat montée dans un circuit (3) d'eau et de vapeur,
**caractérisée** par un échangeur (56) de chaleur qui, du côté primaire, peut être alimenté par un flux (t₁) partiel provenant du circuit (3) d'eau et de vapeur et, du côté secondaire, est relié à la première conduite de combustible et à la conduite (4) de condensat de telle sorte que le flux (t₁) partiel peut être utilisé pour préchauffer au choix le combustible (B) de la turbine à gaz ou le condensat (K).

8. Installation (2) de turbines à gaz et à vapeur suivant la revendication 7, **caractérisée** en ce que l'échangeur (56) de chaleur est suivi, du côté primaire, d'une surface (40) chauffante de préchauffeur.

9. Installation (2) de turbines à gaz et à vapeur suivant la revendication 7 ou 8, **caractérisée** en ce que l'échangeur (56) de chaleur est, pour préchauffer le combustible (B) de la turbine à gaz, monté du côté secondaire dans un circuit (62) intermédiaire.

10. Installation (2) de turbines à gaz et à vapeur suivant l'une des revendications 7 à 9, **caractérisée** en ce qu'il est prévu au moins une vanne (66, 74, 76) pour sélectionner le préchauffage du combustible (B) de la turbine à gaz ou du condensat (K).
